# EUROPÄISCHE PATENTANMELDUNG

(11) **EP 3 034 169 A1**
(43) Veröffentlichungstag der Anmeldung: **22.06.2016**
(21) Anmeldenummer: 14004214.4
(22) Anmeldetag: 15.12.2014
(51) Int. Cl.: B01L 3/00

(54) **Vorratsbehälter für Flüssigkeiten**

(71) Anmelder: Euroimmun Medizinische Labordiagnostika AG, 23560 Lübeck (DE)
(72) Erfinder: Koschinat, Lars, 23626 Warnsdorf (DE)

(57) **Zusammenfassung**

Die vorliegende Erfindung betrifft einen Vorratsbehälter für Flüssigkeiten, umfassend einen flüssigkeitsdichten Tank (1) mit nach oben gerichteter Öffnung, wobei die Öffnung mit einer Schutzfolie umfassend eine äußere Schicht (3) und eine innere Schicht (2) abschließend verschlossen ist, wobei die äußere Schicht eine Aluminiumfolie und die innere Schicht eine Kunststofffolie ist, wobei die äußere Schicht getrennt von der inneren Schicht vom Vorratsbehälter entfernt werden kann, und wobei die innere Schicht mit einer Hohlnadel durchstochen werden kann;
einen Verbund (14) umfassend wenigstens zwei erfindungsgemäße Vorratsbehälter;
sowie ein Verfahren zur Herstellung des erfindungsgemäßen Verbundes, umfassend die Schritte Bereitstellen von wenigstens zwei erfindungsgemäßen Vorratsbehältern, und Aufbringen einer durchgehenden Lage einer Klebefolie (4) auf den äußeren Schichten der Schutzfolien der wenigstens zwei Vorratsbehälter.

## Beschreibung

Die vorliegende Erfindung betrifft einen flüssigkeitsdichten Vorratsbehälter mit einer Öffnung, wobei die Öffnung mit einer Schutzfolie umfassend eine äußere Schicht und eine innere Schicht verschlossen ist, wobei die äußere Schicht eine Aluminiumfolie und die innere Schicht eine Kunststofffolie ist, wobei die äußere Schicht getrennt von der inneren Schicht vom Vorratsbehälter entfernt werden kann, und wobei die innere Schicht mit einer Hohlnadel durchstochen werden kann;
einen Verbund umfassend wenigstens zwei erfindungsgemäße Vorratsbehälter;
sowie ein Verfahren zur Herstellung des erfindungsgemäßen Verbundes, umfassend die Schritte Bereitstellen von wenigstens zwei erfindungsgemäßen Vorratsbehältern, und Aufbringen einer durchgehenden Lage einer Klebefolie auf den äußeren Schichten der Schutzfolien der wenigstens zwei Vorratsbehälter.

Für eine Vielzahl von technischen Verfahren auf den Gebieten der Chemie, Biotechnologie, Pharmazie und Medizin müssen mehrere, jeweils nur mit großem Aufwand herstellbare oder abfüllbare flüssige Reagenzien eingesetzt werden. Es ist sinnvoll, nicht jedes davon für jeden Verfahrensdurchlauf frisch herzustellen, sondern auf Vorrat eine für mehrere Durchläufe ausreichende Menge zuzubereiten, die dann bis zur Verwendung in geeigneten Portionen gelagert werden kann.

Abgesehen von wirtschaftlichen und logistischen Vorteilen führt dies gerade auf dem Gebiet der Medizin, genauer der Labordiagnostik, zur Minimierung der Fehleranfälligkeit des Gesamtsystems, da für jeden Durchlauf des erwünschten diagnostischen Verfahrens praktisch identische Reagenzien eingesetzt werden können. Ist ein Resultat uneindeutig, so kann leicht durch Wiederholung des Versuchs unter Variation von lediglich einem Versuchsparameter, z.B. einem Reagenz fraglicher Güte, überprüft werden, ob gerade dieser Versuchsparameter für den Misserfolg entscheidend war.

Der Bedarf, für mehrere Durchläufe eines Verfahrens praktisch identische Reagenzien zur Hand zu haben, die zuvor in einem Durchgang hergestellt wurden, bedingt die Notwendigkeit, geeignete Vorratsbehälter bereitzustellen, in denen das interessierende Reagenz ohne Qualitätsverlust gelagert werden kann. Die Vorratsbehälter sollten mehrfach geöffnet und wieder verschlossen werden können, damit der verbleibende Rest nach der Entnahme eines Teils des Reagenz geschützt bleibt und nicht verworfen werden muss.

Häufig ist es zudem erforderlich, die Behälter vom Ort der Reagenzentnahme, beispielsweise einem Pipettierautomat, zu einem Lager zu transportieren, beispielsweise einem Kühlraum. Für Lagerung und Transport sollte Unfällen, die zum Verlust von Flüssigkeit führen, vorgebeugt werden.

Nicht zuletzt ist die Identitätssicherung nicht nur bei Proben, sondern auch bei Reagenzien von besonderer Bedeutung. Insbesondere bei Hochdurchsatzverfahren, bei denen eine Vielzahl von Reagenzien parallel verwandt wird, müssen die chemische Beschaffenheit, die Haltbarkeit und die Quelle einer jeden Flüssigkeit bei jedem Schritt nachvollziehbar sein. Jeder Hersteller, der ein stringentes Qualitätsmanagement betreibt, muss die Herkunft jeder Charge anhand deren Kennzeichnung jederzeit nachverfolgen können, ohne dass die damit verbundenen Informationen, die oft den Charakter von Betriebsgeheimnissen haben, dem Endabnehmer zugänglich werden.

Im Stand der Technik ist eine Reihe von Vorratsbehältern beschrieben. Die EP1310303 offenbart einen Behälter für mehrere unterschiedliche, bei der Durchführung eines Protokolls erforderlichen Reagenzien, mit mehreren voneinander getrennten Kompartimenten, der dadurch gekennzeichnet ist, dass er für die Durchführung eines bestimmten Protokolls in einem definierten Format vorkonfektioniert und transportsicher verschlossen ist und jeweils die für das Protokoll erforderlichen Reagenzien in der durch das Format vorgegebenen Menge enthält. Der Behälter ist so konfiguriert, dass er automatisch verarbeitet werden kann. Die EP1310303 offenbart weiter, dass die Folie einen Sandwichaufbau umfassend Aluminium- und Kunststoffschichten aufweist. Die EP1310303 erwähnt jedoch weder die erfindungsgemäße Anordnung der Folienschichten und die Entfernbarkeit einer äußeren Aluminiumschicht getrennt von einer inneren Kunststoffschicht noch die erfindungsgemäße Solldurchstichstelle.

Die WO1987005533A1 und die US3951313A offenbaren weitere Vorratsbehälter für medizinisch verwendbare Flüssigkeiten.

Die im Stand der Technik beschriebenen Vorratsbehälter zeichnen sich dadurch aus, dass sie im verschlossenen Zustand gut zur lang andauernden Bevorratung geeignet sind, nach dem einmaligen Öffnen und Einsatz in pipettierfähigen Vorrichtungen aber nur noch eine relativ kurze Haltbarkeit zeigen. Dies liegt insbesondere daran, dass das dazu führt, dass der Behälter nach dem Öffnen nicht mehr gegen Flüssigkeitsverlust versiegelt ist. Die Flüssigkeit darin kann verdunsten, was wiederum bedingt, dass sich die Konzentration der darin enthaltenen Reagenzien verändert.

Weiterhin können durch die Öffnung Keime in das Gefäß eindringen, insbesondere beim Transport außerhalb geschlossener Vorrichtungen, und sich in der Lösung vermehren und diese verderben oder durch unerwünschte Reaktionen das analytische Ergebnis beeinflussen.

Nicht zuletzt ist beim Wechsel von Vorratsgefäßen, der besonders für den Fall häufig erforderlich wird, dass bei jedem Gebrauch des Vorratsbehälters nur ein geringer Teil der darin bevorrateten Flüssigkeit verbraucht wird, die Gefahr von Missgeschicken und Unfällen gegeben, die dazu führen können, dass ein unverschlossener Vorratsbehälter umkippt und es zum Totalverlust der Flüssigkeit kommt. Da analytische Reagenzien häufig in Komplettpaketen als Kits verkauft werden, kann der Verlust eines einzelnen Behälters, selbst wenn er selbst eine günstige Flüssigkeit enthielt, dazu führen, dass das gesamte Kit neu erworben werden muss.

Neben der Überwindung der genannten Nachteile der im Stand der Technik beschriebenen Behälter liegt der vorliegenden Erfindung ausdrücklich die Aufgabe zu Grunde, einen Vorratsbehälter für Flüssigkeiten bereitzustellen, der bei automatisierten Verfahren einen höheren Schutz gegen den Verlust der darin enthaltenen Flüssigkeit bietet, insbesondere dann, wenn wiederholt Flüssigkeit aus dem Behälter entnommen wird, beispielsweise durch Verdunstung.

Weiterhin liegt der Erfindung die Aufgabe zu Grunde, einen mit geringem Aufwand an die jeweilige Situation, insbesondere beim Transport bzw. bei der Verwendung oder Lagerung zwischen mehreren Verwendungen, anpassbaren Vorratsbehälter zu schaffen, wobei die Anpassung eine bei der Verwendung leichtere Zugänglichkeit der Flüssigkeit ohne störende Verpackungsschichten gestattet, idealerweise bei gleichzeitig optimiertem Schutz vor Flüssigkeitsverlusten. Hingegen soll der Vorratsbehälter zuvor, beim Transport, eine höhere, ausreichende Festigkeit und/oder Bedruckbarkeit aufweisen, die nachfolgend bei der Verwendung nicht mehr benötigt wird.

Weiterhin liegt der vorliegenden Erfindung die Aufgabe zu Grunde, einen Verbund mit mehreren Vorratsbehältern bereitzustellen, wobei die im Verbund mit einander verbundenen Vorratsbehälter möglichst effizient und in einem Schritt voneinander getrennt werden können und dabei Daten zu den Produkten im jeweiligen Verbund entfernt werden können.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

In einem ersten Aspekt wird die der Erfindung zu Grunde liegende Aufgabe gelöst durch einen flüssigkeitsdichten Vorratsbehälter mit einer Öffnung,
wobei die Öffnung mit einer Schutzfolie umfassend eine innere Schicht und eine äußere Schicht verschlossen ist,
wobei die innere Schicht eine mit einer Hohlnadel durchstechbare Kunststofffolie ist und die äußere Schicht eine Schicht ist, bevorzugt eine Aluminiumfolie, die eine höhere Barrieredichtigkeit als die innere Schicht aufweist,
und wobei die äußere Schicht getrennt von der inneren Schicht vom Vorratsbehälter entfernt werden kann.

In einer ersten bevorzugten Ausführungsform weist die innere Schicht eine Solldurchstichstelle auf.

In einer zweiten bevorzugten Ausführungsform, die auch eine Ausführungsform der anderen bevorzugten Ausführungsformen darstellt, ist die Solldurchstichstelle in Form von zwei kreuzförmig angeordneten Schwächungslinien in der inneren Schicht ausgestaltet.

In einer dritten bevorzugten Ausführungsform, die auch eine Ausführungsform der anderen bevorzugten Ausführungsformen darstellt, ist die innere Schicht, bevorzugt die Sollbruchstelle darin derart ausgestaltet, dass nach dem Durchstechen und anschließenden Entfernen der Hohlnadel eine in dem Vorratsbehälter enthaltene wässrige Flüssigkeit nicht durch die durchstochene innere Schicht austreten kann, wenn der Vorratsbehälter auf den Kopf gestellt wird.

In einer vierten bevorzugten Ausführungsform, die auch eine Ausführungsform der anderen bevorzugten Ausführungsformen darstellt, weist der Vorratsbehälter weiter eine über der äußeren Schicht aufgebrachte abziehbare Klebefolie auf, die bevorzugt über den Umfang des Vorratsbehälters hinausreicht,
wobei das Abziehen der Klebefolie bewirkt, dass die äußere Schicht, nicht aber die innere Schicht der Schutzfolie von dem Vorratsbehälter entfernt wird.

In einer fünften bevorzugten Ausführungsform, die auch eine Ausführungsform der anderen bevorzugten Ausführungsformen darstellt, weist die Klebefolie eine Kennzeichnung auf.

In einer sechsten bevorzugten Ausführungsform, die auch eine Ausführungsform der anderen bevorzugten Ausführungsformen darstellt, umfasst der Vorratsbehälter wenigstens zwei Kompartimente.

In einer siebten bevorzugten Ausführungsform, die auch eine Ausführungsform der anderen bevorzugten Ausführungsformen darstellt, deckt die Schutzfolie eines der Kompartimente ab.

In einer achten bevorzugten Ausführungsform, die auch eine Ausführungsform der anderen bevorzugten Ausführungsformen darstellt, weist das nicht von der Schutzfolie abgedeckte Kompartiment einen kleineren, der Form des Kompartimentes angepassten Vorratsbehälter mit der Schutzfolie auf.

In einer neunten bevorzugten Ausführungsform, die auch eine Ausführungsform der anderen bevorzugten Ausführungsformen darstellt, umfasst eine Flüssigkeit, bevorzugt eine Flüssigkeit auf Wasserbasis.

In einem zweiten Aspekt wird die der Erfindung zu Grunde liegende Aufgabe gelöst durch einen Verbund umfassend wenigstens zwei erfindungsgemäße Vorratsbehälter, bevorzugt verbunden über ein Befestigungsmittel.

In einer ersten bevorzugten Ausführungsform des zweiten Aspekts weisen die Vorratsbehälter eine über der äußeren Schicht aufgebrachte Klebefolie auf, wobei das Abziehen der Klebefolie bewirkt, dass die äußere Schicht, nicht aber die innere Schicht der Schutzfolien von den Vorratsbehältern entfernt wird,
und wobei die Klebefolie in Form einer durchgehenden Lage über den Schutzfolien der Vorratsbehälter ausgestaltet ist, die in einem Stück von dem Verbund abgezogen werden kann.

In einem dritten Aspekt wird die der Erfindung zu Grunde liegende Aufgabe gelöst durch ein Verfahren zur Herstellung des erfindungsgemäßen Verbundes, umfassend die Schritte
a) Bereitstellen von wenigstens zwei erfindungsgemäßen Vorratsbehältern und
b) Aufbringen einer durchgehenden Lage einer Klebefolie auf den äußeren Schichten der Schutzfolien der wenigstens zwei Vorratsbehälter.

In einem vierten Aspekt wird die der Erfindung zu Grunde liegende Aufgabe gelöst durch ein Verfahren umfassend die Schritte
a) Bereitstellen eines erfindungsgemäßen Vorratsbehälters, optional vorliegend in Form eines erfindungsgemäßen Verbundes, wobei der Vorratsbehälter eine Flüssigkeit enthält,
b) Einstechen einer Hohlnadel in den Vorratsbehälter und Entnahme von wenigstens einem Teil der im Vorratsbehälter oder einem Kompartiment davon enthaltenen Flüssigkeit,
c) Übertragung der in Schritt b) aus dem Vorratsbehälter entnommenen Flüssigkeit in einen separaten Behälter, und
d) Entfernen der Hohlnadel aus dem Vorratsbehälter.

In einer bevorzugten Ausführungsform umfasst das Verfahren weiterhin die Schritte
e) Wiederholen der Schritte a) und b), wobei die Flüssigkeit einem anderen Vorratsbehälter oder, sofern vorhanden, einem anderen Kompartiment des Vorratsbehälters entnommen wird.
f) Übertragung der in Schritt e) entnommenen Flüssigkeit in den separaten Behälter unter Kontaktierung der in Schritt a) und b) bzw. der in Schritt e) entnommenen Flüssigkeiten.

Die vorliegende Erfindung betrifft einen flüssigkeitsdichten Vorratsbehälter mit einer Öffnung, bevorzugt mit einer nach oben gerichteten Öffnung, der für die Lagerung medizinisch relevanter Flüssigkeiten geeignet ist. Der Vorratsbehälter kann aus jedem Material bestehen, das eine ausreichende Festigkeit und mechanische Stabilität aufweist und gegenüber der darin befindlichen Flüssigkeit chemisch ausreichend inert ist. Beispielsweise kommen Glas oder gängige Kunststoffe wie Polyethylen in Frage. Öffnung und Form sind so gewählt, dass eine Flüssigkeit durch den Einfluss der Schwerkraft auch bei unverschlossener Öffnung im Inneren gehalten wird. Der Vorratsbehälter kann die Form eines Reagenzglases oder eines handelsüblichen Plastikcups aufweisen, bevorzugt in Richtung zum Boden verjüngter Form. Er kann jedoch auch eine rechteckige Form mit zwei kurzen und zwei langen Wänden aufweisen. Es sind jedoch auch weitere geometrische Gestaltungen möglich, sofern die vorgenannten Voraussetzungen erfüllt werden, beispielsweise Gefäß mit fünf-, sechs- oder vieleckiger Grundfläche oder Vielecke, bei denen eine oder mehrere Seiten keine geraden Strecken zwischen den Eckpunkten darstellen sondern eine Kurve.

Die Schutzfolie besteht aus einer inneren, dem Inneren des Vorratsbehälters zugewandten Schicht und einer äußeren, der Umgebung zugewandten Schicht. Zusätzlich können weitere Schichten vorhanden sein, soweit dies nicht die Funktion der inneren und äußeren Schicht, insbesondere die Durchstechbarkeit der inneren Schicht, beeinträchtigt. Solche Schichten können Siegellack, weitere Kunststoffschichten oder einen Aufdruck umfassen.

Die äußere Schicht weist eine höhere Barrieredichtigkeit als die innere auf. Sie umfasst bevorzugt eine Aluminiumfolie aus handelsüblichen Aluminiumlegierungen oder -mischungen, bevorzugt mit einer Dicke von 5 bis 100 µm, bevorzugter 8 bis 40 µm Dicke. Die innere Schicht umfasst eine Kunststofffolie, bevorzugt mit einer Dicke von 1 bis 30 µm, noch bevorzugter 2 bis 40 µm, am bevorzugtesten 4 bis 8 µm. Die Gesamtheit der Schutzfolie kann durch Aufbringen der Kunststofffolie auf die Aluminiumfolie hergestellt werden, beispielsweise mittels Aufkaschieren oder Koextrusion. Ein geeignetes System ist beispielsweise in der EP 1 918 094 beschrieben. Statt Aluminiumfolie können jedoch auch andere Materialien mit höherer Barrieredichtigkeit gewählt, beispielsweise geeignete Kunststofffolien. Die Barrieredichtigkeit wird bevorzugt über die Sauerstoffdurchlässigkeit quantifiziert, bevorzugt gemessen gemäß DIN 53380 bei 23 °C und 0 % relativer Luftfeuchtigkeit. Besonders bevorzugt liegt die Sauerstoffdurchlässigkeit der äußeren Schicht bei weniger als 0,5 cm³/m² x d x bar. In einer weiteren bevorzugten Ausführungsform wird die Barrieredichtigkeit über die Wasserdampdurchlässigkeit quantifiziert, bevorzugt gemessen gemäß DIN 53122 bei 23 °C und 85% relativer Luftfeuchtigkeit. Besonders bevorzugt liegt die Wasserdampfdurchlässigkeit der äußeren Schicht bei weniger als 0,5 g/m² x d. In einer weiteren bevorzugten Ausführungsform wird die Barrieredichtigkeit über die Lichtdurchlässigkeit quantifiziert, genauer über die optische Dicht bei 380 nm. In einer besonders bevorzugten Ausführungsform wird die Barrieredichtigkeit über die Gesamtheit der Parameter Sauerstoffdurchlässigkeit, Wasserdampfdurchlässigkeit und Lichtdurchlässigkeit quantifiziert.

Die Schutzfolie schließt die Öffnung vor dem Durchstechen, bevorzugt auch danach, derart ab, dass der Vorratsbehälter, unabhängig davon, in welcher Position er gehalten wird, flüssigkeitsdicht ist.

Essentiell ist, dass die äußere Schicht getrennt von der inneren Schicht vom Vorratsbehälter entfernt werden kann. Dies kann dadurch bewerkstelligt werden, dass die innere Schicht fest auf den Rändern der Öffnung angebracht wird, so dass sie ohne Zerreißen nicht vom Vorratsbehälter getrennt werden kann, während die Aluminiumschicht nicht direkt mit dem Vorratsbehälter verbunden ist, sondern nur über einen leicht ablösbaren Haftvermittler an der Kunststofffolie klebt. Geeignete Haftvermittler sind beispielsweise in der EP 2 327 636 beschrieben. Die Ablösbarkeit wird optional dadurch unterstützt, dass die äußere Schicht über den Umfang des Vorratsbehälters hinausreicht, beispielsweise in Form einer handlichen, leicht greifbaren Lasche.

Weiterhin ist essentiell, dass die innere Schicht mit einer Hohlnadel durchstochen werden kann, bevorzugt lediglich *nach*, nicht aber *vor* dem Trennen der inneren Schicht von der äußeren Schicht, welche der Schutzfolie erhöhte Festigkeit verleiht. Bevorzugt gilt eine innere Schicht als durchstechbar, wenn sie durch eine leichte Druckausübung von Hand mit einer Hohlnadel des Typs 250 µl REF PN19477-002 von der Firma Agilent durchstochen werden kann.

Bevorzugt weist die innere Schicht eine Solldurchstichstelle auf. Diese kann durch Schwächungsstellen ausgebildet sein, die beispielsweise mit einem Laser in die innere Schicht eingearbeitet werden können, bevorzugt mit einem CO₂-Laser, wie es beispielsweise in der EP 2 327 636 beschrieben ist. Alternativ kann die Sollbruchstelle durch Einstanzen, Prägen, Perforieren oder ähnliche Verfahren gebildet werden.

Die Form der Sollbruchstelle wird bevorzugt so gewählt, dass nach dem Durchstechen und anschließenden Entfernen der Hohlnadel eine wässrige Flüssigkeit nicht durch die durchstochene Schicht austreten kann, wenn der Vorratsbehälter auf den Kopf gestellt wird. Dies kann dadurch erreicht werden, dass die durch das Durchstechen entstehende Öffnung ausreichend klein gehalten wird oder, bevorzugt, durch die Solldurchstichstelle bedingt ist, dass beim Durchstechen kein Stück der inneren Schicht verloren geht, sondern die Durchstichstelle durch Aneinanderhaften der nach dem Durchstechen frei beweglichen Folienteile wieder geschlossen wird. Die Oberflächenspannung des Wassers in der Flüssigkeit und die Adhäsionskräfte der Enden der Folie an der Durchstichstelle andererseits bedingten einen Selbstverschluss nach dem Entfernen der Hohlnadel. Der Fachmann ist in der Lage, durch die Wahl relevanter Parameter wie Schichtdicke, Form der Sollbruchstelle, Art des Gefäßes und Volumen der Flüssigkeit zu einer geeigneten Ausführungsform zu gelangen, die diese Eigenschaft aufweist.

Die Form der Solldurchstichstelle ist bevorzugt so zu wählen, dass sie den Selbstverschluss zu ermöglicht. Bevorzugt ist die Solldurchstichstelle in Form von zwei kreuzförmig angeordneten Schwächungslinien in der inneren Schicht ausgestaltet. Der Durchstich erfolgt dann besonders leicht an der Schnittstelle der beiden Schwächungslinien.

Weiterhin ist die Solldurchstichstelle bevorzugt so zu wählen, dass die Wahrscheinlichkeit, beim Entfernen der äußeren Schicht nahe der Solldurchstichstelle versehentlich ein Loch in der inneren Schicht zu erzeugen, besonders gering ist. Dies lässt sich dadurch bewerkstelligen, dass die Solldurchstichstelle entweder keinen Schnittpunkt von Schwächungslinien aufweist, oder lediglich einen Schnittpunkt von Schwächungslinien, von dem ausgehend höchstens drei, bevorzugter höchstens zwei Schwächungslinien vom Schnittpunkt weg aus Richtung des Zentrums der Solldurchstichstelle wegführen. Beispielsweise weisen Solldurchstichstellen in der Form eines "T" oder eines "Y" drei Schwächungslinien auf, die vom Schnittpunkt weg aus Richtung des Zentrums der Solldurchstichstelle führen. Beispielsweise weist eine Solldurchstichstellen in der Form eines "V" oder eines "U" keinen Schnittpunkt von Schwächungslinien auf.

Optional kann der Vorratsbehälter eine Klebefolie aufweisen, bevorzugt über der äußeren Schicht angebracht, wobei das Abziehen dieser Klebefolie bewirkt, dass die äußere Schicht, nicht aber die innere Schicht der Schutzfolie von dem Vorratsbehälter entfernt wird. Bevorzugt reicht sie über den Umfang der Öffnung, bevorzugt den Umfang des Vorratsbehälters hinaus. Dies kann dadurch erreicht werden, dass die äußere Schicht über einen leicht lösbares Haftmittel mit der inneren Schicht verbunden ist, während die Klebefolie über ein stärker anhaftendes Haftmittel mit der äußeren Schicht verbunden ist. In einer bevorzugten Ausführungsform wird die Klebefolie in einer durchgehenden Lage auf die äußere Schicht der Schutzfolien von wenigstens zwei, bevorzugt allen Vorratsbehältern in einem erfindungsgemäßen Verbund aufgebracht. Das bedeutet in einer besonders bevorzugten Ausführungsform, dass ein ununterbrochenes Stück der Klebefolie die Vorratsgefäße durch Anhaften an deren jeweiliger äußerer Schicht verbindet, bevorzugt zusätzlich zu einer Verbindung über ein Befestigungsmittel.

Bevorzugt enthält der Vorratsbehälter eine Flüssigkeit auf Wasserbasis. Dies bedeutet bevorzugt, dass das vorherrschende Lösungsmittel Wasser ist. Die Flüssigkeit kann weitere Stoffe enthalten, insbesondere Puffer, Salze und für eine chemische oder analytische Reaktion benötigte Reagenzien, besonders bevorzugt solche, die für einen diagnostischen Test, beispielsweise ELISA, geeignet sind, beispielsweise Enzymkonjugat, Chromogen oder Antikörper. Es können jedoch auch andere Lösungsmittel als Wasser verwendet werden, beispielsweise organische Lösungsmittel.

Neben der Flüssigkeit weist der Vorratsbehälter optional eine Gasphase auf, die aus Luft bestehen kann. Bevorzugt handelt es sich um ein relativ zu Luft chemisch inerteres Gas, welches dadurch erhalten werden kann, dass ein chemisch inertes Gas zugesetzt wird, beispielsweise Stickstoff, Kohlendioxid oder ein Edelgas wie Argon. Der Vorratsbehälter ist bevorzugt zu 10 bis 98, bevorzugter 15 bis 90, noch bevorzugter 25 bis 75 Volumenprozent mit Flüssigkeit befüllt.

Neben der Flüssigkeit kann der Vorratsbehälter auch Feststoffe enthalten, sofern diese über die eingestochene Hohlnadel und die darüber entnommen Flüssigkeit entnommen werden können. In einer besonders bevorzugten Ausführungsform weist die Flüssigkeit Beads auf, die mit einem chemischen Reagenz beschichtet sind, beispielsweise einem Antigen zum Nachweis von Antikörpern in einer Probe. Der Volumenanteil des Feststoffes, bevorzugt der Beads an der Flüssigkeit beträgt bevorzugt 5 bis 80, noch bevorzugter 7,5 bis 60, und am bevorzugtesten 10 bis 50 Volumenprozent.

Zum Schutz von lichtempfindlichen Reagenzien kann der Vorratsbehälter eine verminderte Lichtdurchlässigkeit aufweisen, beispielsweise einen Lichtschutz durch eine dunkle Beschichtung.

Beim Abziehen der Klebefolie kann die gesamte äußere Schicht entfernt werden. Bevorzugt weist die äußere Schicht jedoch Schwächungslinien auf und reißt beim Abziehen der Klebefolie an diesen Linien auf, so dass ein Rest der äußeren Schicht in vorgegebener Form zurückbleibt. Dieser Rest kann beispielsweise einen unterbrochenen oder, bevorzugt, ununterbrochenen Rahmen oder Ring um das Zentrum der Öffnung bzw. die Solldurchstichstelle bilden. Der Umfang, in dem die innere Schicht beim Durchstechen aufplatzt, wird dann nicht nur durch die Solldurchstichstelle begrenzt, sondern durch den Rahmen an zurückgebliebener äußerer Schicht.

In einer bevorzugten Ausführungsform weist der Vorratsbehälter zwei Kompartimente auf. In einer bevorzugten Ausführungsform bedeutet der Begriff "Kompartiment", wie hierin verwendet, ein durch eine geeignete Abtrennung gebildete flüssigkeitsdichte Kammer innerhalb des Vorratsbehälters. Die Abtrennung ist bevorzugt eine Trennwand, die bis zur Höhe der Öffnung des Vorratsbehälters reicht. Bevorzugt weist wenigstens ein Kompartiment einen an seine Form angepassten kleineren separaten erfindungsgemäßen Vorratsbehälter auf, wobei dessen Schutzfolie bevorzugt nicht direkt mit der Schutzfolie des zuvor genannten Vorratsbehälters verbunden ist, besonders bevorzugt jedoch indirekt über eine auf beide Behälter aufgebrachte Klebefolie. Durch das Einbringen des flüssigkeitsgefüllten und separat verschlossenen kleineren Vorratsbehälters kann ein mit zwei Flüssigkeiten ausgestatteter Vorratsbehälter hergestellt werden, ohne dass die Gefahr einer Vermischung bei der Herstellung oder Befüllung besteht. Weiterhin können verschiedene Kombinationen von Flüssigkeiten flexibel zusammengestellt werden.

Wenigstens zwei, bevorzugt wenigstens 3, 4, 6, 8, 12, 20, 50 oder 100 Vorratsbehälter können zu einem Verbund zusammengefasst sein. In einer bevorzugten Ausführungsform wird unter dem Begriff "Verbund", wie hierin verwendet, eine Gruppe fest, bevorzugt jedoch lösbar miteinander verbundenen Vorratsbehältern verstanden, wobei die Verbindung in Form eines Befestigungsmittels und/oder über die Klebefolie erreicht wird. Als Befestigungsmittel kommen Steckverbindungen jeglicher Art in Frage. Im Falle eines rechteckigen Vorratsbehälters weisen zwei gegenüberliegende Wände, bevorzugt die kürzeren gegenüberliegenden Wände, bevorzugt jeweils ein nach außen stehendes Steckelement in Form eines männlichen bzw. eines weiblichen Teils auf. Bevorzugt lässt sich so eine Reihe von Vorratsbehältern mit einer Polarität von einem Ende der Reihe zum anderen bilden, die durch die Steckverbindung vorgegeben ist. Optional bleiben die Vorratsbehälter im Verbund durch das Befestigungsmittel flexibel mit einander verbunden. Insbesondere bei Verwendung eines von einem Kugelgelenk abgeleiteten Befestigungsmittels lassen sich die Vorratsbehälter in Form einer flexiblen Kette gestalten. Besonders bevorzugt werden die Vorratsbehälter in einem solchen Verbund in einer Reihe in gleicher Orientierung angeordnet. In einer weiteren bevorzugten Ausführungsform weist der Verbund an wenigstens einem Ende eine nicht für das Zusammenhalten des Verbundes genutztes männliches oder weibliches Teil einer Steckverbindung auf, und auf diese kann ein Griff zum Handhaben des Verbundes aufgesteckt werden, der ein komplementäres weibliches bzw. männliches Teil aufweist.

Der erfindungsgemäße Vorratsbehälter kann für ein Verfahren eingesetzt werden, bei dem eine Reaktion oder sonstige Nachweismethode das Zusammenbringen der im Vorratsbehälter befindlichen Flüssigkeit mit einem Reaktionspartner erfordert. Die Übertragung gemäß Schritt c) kann das Kontaktieren mit einer Probe, beispielsweise einer menschlichen Probe, bevorzugt einer Blutprobe, oder einem Substrat, Agens oder Reagenz, beispielsweise einer fixierten Zelle oder einem fixierten Gewebe umfassen. In einer bevorzugten Ausführungsform handelt es sich bei der Flüssigkeit um eine Lösung umfassend einen Antikörper, der optional mit einem Enzym, einem fluoreszenz- oder chemilumineszenzfähigen oder auf sonstige Weise detektierbaren Molekül assoziiert ist. Alternativ kann es sich bei dieser Flüssigkeit um eine Probe oder eine Kontrolle von bekannter Beschaffenheit handeln, beispielsweise eine Positivkontrolle mit bekannter Konzentration eines nachzuweisenden Analyten.

In einer besonders bevorzugten Ausführungsform wird das erfindungsgemäße Verfahren zur Durchführung eines Immunassays verwendet, insbesondere ausgewählt aus der Gruppe umfassend ELISA, chemilumineszenzbasierter Immunassay oder blotbasierter Immunassay, z.B. Lineblot oder Westernblot.

Derartige Verfahren werden bevorzugt in einem Laborautomaten durchgeführt, der geeignete Reaktionsansätze automatisch zusammenstellt. Ein solcher Laborautomat weist geeignete Mittel zum Steuern des Verfahrens, zum Pumpen und Pipettieren von Flüssigkeit, zum Einstechen der Hohlnadel sowie einen geeigneten separaten Behälter als Reaktionsraum auf, in dem die Flüssigkeit aus dem Vorratsbehälter eingesetzt wird, beispielsweise zum Waschen oder zur chemischen Umsetzung mit einem Reaktionspartner. Geeignete Reaktionsräume/- verfahren sind im Stand der Technik beschrieben, beispielsweise in der EP 2 191 893.

Im Folgenden wird die Erfindung unter Bezugnahme auf die Figuren anhand von Ausführungsbeispielen erläutert. Die beschriebenen Ausführungsformen sind in jeder Hinsicht lediglich beispielhaft und nicht als einschränkend zu verstehen, und verschiedene Kombinationen der angeführten Merkmale sind vom Umfang der Erfindung umfasst.

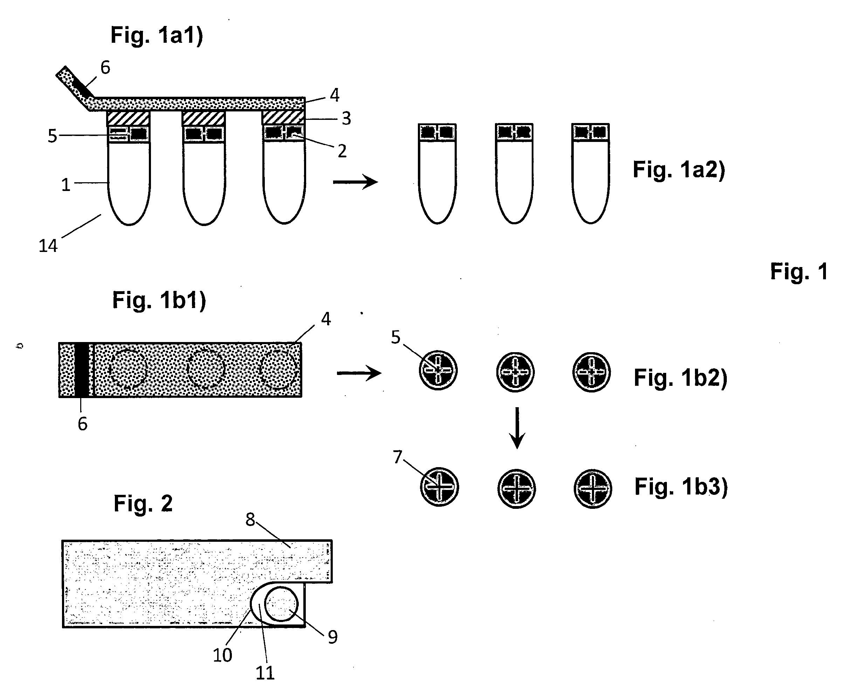

Fig. 1 zeigt einen erfindungsgemäßen Verbund (14) mit Vorratsbehältern (1), die mit einer Schutzfolie umfassend innere (2) und äußere Schicht (3) verschlossen sind. Der Verbund wird zusätzlich über eine an der äußeren Schicht haftenden Klebefolie (4) zusammengehalten. In der inneren Folie befindet sich eine Solldurchstichstelle in Form eines Kreuzes (5). Auf der Klebefolie ist eine Kennzeichnung (6) aufgebracht.

Während **Fig. 1a1)** den Verbund in vollständiger Form in der Seitenansicht zeigt, kann die in Figur **1a2)** erhaltene Form daraus durch Abziehen der Klebefolie (4) und der daran haftenden äußeren Schicht (3) erhalten werden.

**Fig. 1b1)** und **Fig. 1b2)** zeigen die vollständige bzw. die nach Abziehen der Klebefolie erhaltene Form von oben. **Fig. 1b3)** zeigt die Vorratsbehälter aus dem Verbund mit durchstochen Solldurchstichstelle (7).

**Fig. 2** zeigt einen erfindungsgemäßen Vorratsbehälter von oben mit einem ersten (8) und einem zweiten, kleineren (11) Kompartiment, die durch eine Trennwand (10) getrennt sind. Das kleinere Kompartiment enthält einen kleineren erfindungsgemäßen Vorratsbehälter (9).

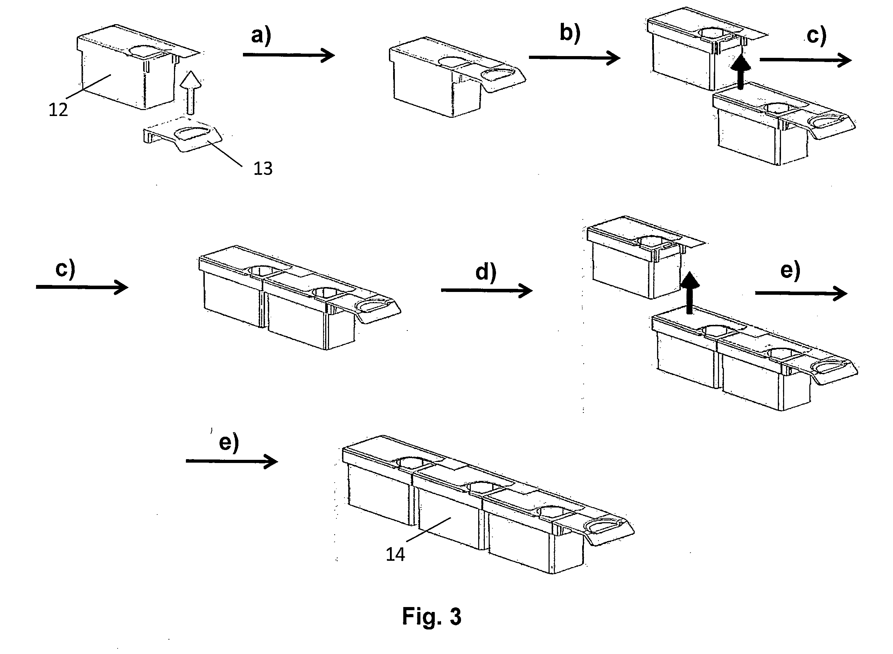

**Fig. 3** zeigt das Zusammenstellen eines erfindungsgemäßen Verbunds umfassend einen rechteckigen Vorratsbehälter (12) mit zwei Kompartimenten über eine Steckverbindung. Der erste rechteckige Vorratsbehälter weist einen Griff (13) auf, der über die Steckverbindung angebracht wird. Es entsteht ein Verbund aus Vorratsbehältern mit einheitlicher Orientierung (14).

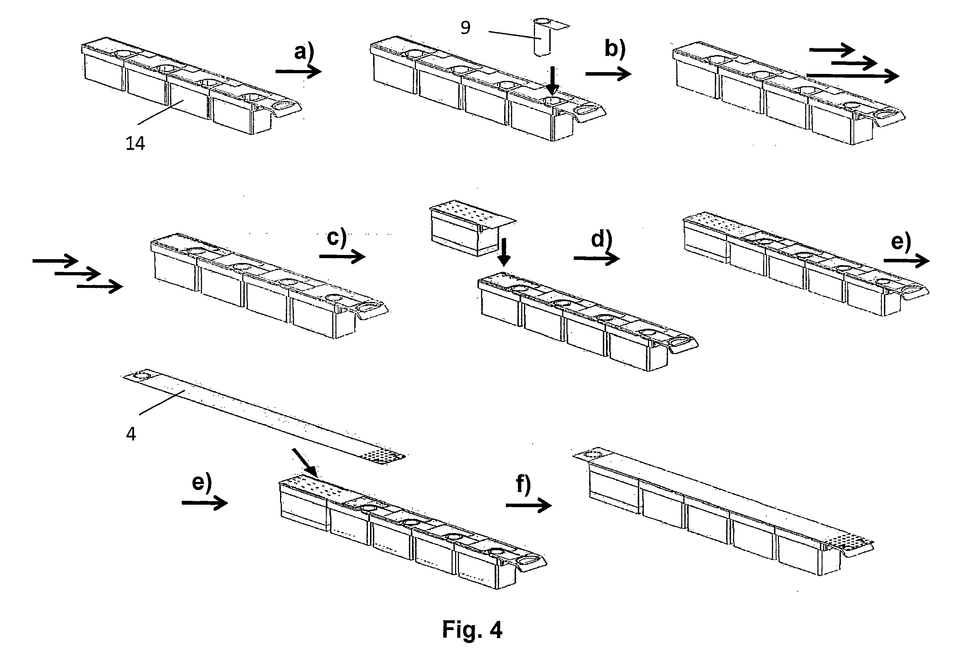

**Fig. 4** illustriert, wie in die kleineren Kompartimente der gemäß Fig. 3 zu einem Verbund (15) zusammengestellten Vorratsbehälter kleinere Vorratsbehälter (16) eingesetzt werden, gefolgt vom Aufbringen einer Klebefolie (4).

### Bezugszeichenliste:

- 1: Vorratsbehälter
- 2: Innere Schicht
- 3: Äußere Schicht
- 4: Klebefolie
- 5: Solldurchstichstelle
- 6: Kennzeichnung
- 7: Durchstochene Solldurchstichstelle
- 8: Erstes Kompartiment
- 9: Kleinerer Vorratsbehälter
- 10: Trennwand
- 11: Zweites Kompartiment
- 12: Rechteckiger Vorratsbehälter
- 13: Griff
- 14: Verbund

## Patentansprüche

1. Flüssigkeitsdichter Vorratsbehälter mit einer Öffnung,
wobei die Öffnung mit einer Schutzfolie umfassend eine innere Schicht und eine äußere Schicht verschlossen ist,
wobei die innere Schicht eine mit einer Hohlnadel durchstechbare Kunststofffolie ist und die äußere Schicht eine Schicht ist, bevorzugt eine Aluminiumfolie, die eine höhere Barrieredichtigkeit als die innere Schicht aufweist,
und wobei die äußere Schicht getrennt von der inneren Schicht vom Vorratsbehälter entfernt werden kann.

2. Vorratsbehälter nach Anspruch 1, wobei die innere Schicht eine Solldurchstichstelle aufweist.

3. Vorratsbehälter nach Anspruch 2, wobei die Solldurchstichstelle in Form von zwei kreuzförmig angeordneten Schwächungslinien in der inneren Schicht ausgestaltet ist.

4. Vorratsbehälter nach einem der Ansprüche 1 bis 3, wobei die innere Schicht, bevorzugt die Sollbruchstelle darin derart ausgestaltet ist, dass nach dem Durchstechen und anschließendem Entfernen der Hohlnadel eine in dem Vorratsbehälter enthaltene wässrige Flüssigkeit nicht durch die durchstochene innere Schicht austreten kann, wenn der Vorratsbehälter auf den Kopf gestellt wird.

5. Vorratsbehälter nach einem der Ansprüche 1 bis 4, weiter aufweisend eine über der äußeren Schicht aufgebrachte abziehbare Klebefolie, die bevorzugt über den Umfang des Vorratsbehälters hinausreicht,
wobei das Abziehen der Klebefolie bewirkt, dass die äußere Schicht, nicht aber die innere Schicht der Schutzfolie von dem Vorratsbehälter entfernt wird.

6. Vorratsbehälter nach Anspruch 5, wobei die Klebefolie eine Kennzeichnung aufweist.

7. Vorratsbehälter nach einem der Ansprüche 1 bis 6, wobei der Vorratsbehälter wenigstens zwei Kompartimente umfasst.

8. Vorratsbehälter nach einem der Ansprüche 1 bis 7, wobei die Schutzfolie eines der Kompartimente abdeckt.

9. Vorratsbehälter nach Anspruch 8, wobei das nicht von der Schutzfolie abgedeckte Kompartiment einen kleineren, der Form des Kompartiments angepassten Vorratsbehälter mit Schutzfolie gemäß Anspruch 1 aufweist.

10. Vorratsbehälter nach einem der Ansprüche 1 bis 9, umfassend eine Flüssigkeit, bevorzugt eine Flüssigkeit auf Wasserbasis.

11. Verbund umfassend wenigstens zwei Vorratsbehälter nach einem der Ansprüche 1 bis 10, bevorzugt verbunden über ein Befestigungsmittel.

12. Verbund gemäß Anspruch 11, wobei die Vorratsbehälter eine über der äußeren Schicht aufgebrachte Klebefolie aufweisen,
wobei das Abziehen der Klebefolie bewirkt, dass die äußere Schicht, nicht aber die innere Schicht der Schutzfolien von den Vorratsbehältern entfernt wird,
und wobei die Klebefolie in Form einer durchgehenden Lage über den Schutzfolien der Vorratsbehälter ausgestaltet ist, die in einem Stück von dem Verbund abgezogen werden kann.

13. Verfahren zur Herstellung eines Verbundes, umfassend die Schritte
a) Bereitstellen von wenigstens zwei Vorratsbehältern nach einem der Ansprüche 1 bis 10, und
b) Aufbringen einer durchgehenden Lage einer Klebefolie auf den äußeren Schichten der Schutzfolien der wenigstens zwei Vorratsbehälter.

14. Verfahren umfassend die Schritte
a) Bereitstellen eines Vorratsbehälters nach einem der Ansprüche 1 bis 10, optional vorliegend in Form eines Verbundes nach einem der Ansprüche 11 bis 12, wobei der Vorratsbehälter eine Flüssigkeit enthält,
b) Einstechen einer Hohlnadel in den Vorratsbehälter und Entnahme von wenigstens einem Teil der im Vorratsbehälter oder einem Kompartiment davon enthaltenen Flüssigkeit,
c) Übertragung der in Schritt b) aus dem Vorratsbehälter entnommenen Flüssigkeit in einen separaten Behälter, und
d) Entfernen der Hohlnadel aus dem Vorratsbehälter.

15. Verfahren nach Anspruch 14, weiter umfassend die Schritte
e) Wiederholen der Schritte a) und b), wobei die Flüssigkeit einem anderen Vorratsbehälter oder, sofern vorhanden, einem anderen Kompartiment des Vorratsbehälters entnommen wird.
f) Übertragung der in Schritt e) entnommenen Flüssigkeit in den separaten Behälter unter Kontaktierung der in Schritt a) und b) bzw. der in Schritt e) entnommenen Flüssigkeiten.
